(19) Europäisches Patentamt

European Patent Office

Office européen des brevets

(11) Veröffentlichungsnummer: **0 463 305 B1**

(12) **EUROPÄISCHE PATENTSCHRIFT**

(45) Veröffentlichungstag der Patentschrift: **21.06.95**

(51) Int. Cl.⁶: **B60T 8/32**, G01P 3/489

(21) Anmeldenummer: **91105930.1**

(22) Anmeldetag: **13.04.91**

(54) **Verfahren zur Korrektur der durch Radsensoren ermittelten Drehgeschwindigkeiten von Fahrzeugrädern.**

(30) Priorität: **22.06.90 DE 4019886**

(43) Veröffentlichungstag der Anmeldung:
**02.01.92 Patentblatt 92/01**

(45) Bekanntmachung des Hinweises auf die Patenterteilung:
**21.06.95 Patentblatt 95/25**

(84) Benannte Vertragsstaaten:
**DE ES FR GB IT SE**

(56) Entgegenhaltungen:
**WO-A-89/04783**
**DE-A- 3 738 914**

(73) Patentinhaber: **MERCEDES-BENZ AG**
**Mercedesstrasse 136**
**D-70327 Stuttgart (DE)**

(72) Erfinder: **Zimmer, Richard**
**Robert-Koch-Strasse 17**
**W-7012 Fellbach (DE)**
Erfinder: **Müller, Armin**
**Südstrasse 142**
**W-7150 Backnang (DE)**
Erfinder: **Klarer, Martin**
**Wielandstrasse 11a**
**W-7053 Kernen - Stetten (DE)**

## Beschreibung

Die Erfindung betrifft ein Verfahren zur Korrektur der durch Radsensoren ermittelten Drehgeschwindigkeiten von Fahrzeugrädern gemäß dem Oberbegriff des Patentanspruches 1.

Es ist bereits ein gattungsgemäßes Verfahren bekannt (DE 37 38 914 A1), wonach bei schlupffreier Fahrt das Radpaar ermittelt wird, dessen Radgeschwindigkeiten sich am wenigsten unterscheiden. Aus diesen Radgeschwindigkeiten wird ein Mittelwert gebildet, der mit den Radgeschwindigkeiten der anderen Räder in Beziehung gesetzt einen Korrekturwert ergibt, mit dem die anderen Radgeschwindigkeiten korrigiert werden. Dieses Verfahren wird dabei nur dann durchgeführt, wenn kein Schlupf an den Rädern auftritt und wenn keine Kurve durchfahren wird (Lenkwinkelsignal ($\delta$) klein, Querbeschleunigung klein oder Radgeschwindigkeiten der Räder einer Achse etwa gleich). Das Auftreten von Schlupf kann dabei aus dem Auftreten von Signalen eines AnitBlockierSystems (ABS) und/oder einer AntriebsSchlupfRegelung (ASR) erkannt werden.

Aufgabe der Erfindung ist es, ein Verfahren zur Korrektur der durch Radsensoren ermittelten Drehgeschwindigkeiten von Fahrzeugrädern derart auszugestalten, daß die Korrektur der durch Radsensoren ermittelten Drehgeschwindigkeiten von Fahrzeugrädern bezüglich der Signalerfassung vereinfacht wird.

Diese Aufgabe wird bei einem gattungsgemäßen Verfahren zur Korrektur der durch Radsensoren ermittelten Drehgeschwindigkeiten von Fahrzeugrädern erfindungsgemäß mit den kennzeichnenden Merkmalen des Anspruchs 1 gelöst, wobei die Merkmale der Unteransprüche vorteilhafte Aus- und Weiterbildungen kennzeichnen.

Vorteile der Erfindung gegenüber dem bekannten Stand der Technik bestehen insbesondere darin, daß auf die Verwendung eines Lenkwinkelsensors verzichtet werden kann. Außer den Raddrehzahlen werden in Abhängigkeit der Ausführungsform nur Signale verwendet, die einfach und genau erfaßt werden können, wie z.B. das Auftreten von ABS- oder ASR-Signalen.

Bei dem erfindungsgemäßen Verfahren wird aus der Größenordnung und dem Verhältnis zunächst unkorrigierter Raddrehzahlen $\Omega_u$ die allgemeine Fahrsituation bezüglich der Faktoren Fahrzeuggeschwindigkeit $V_{Fzg}$ und Querbeschleunigung $a_q$ abgeschätzt. Außerdem erfolgt dabei eine Abschätzung des Antriebs- bzw. Bremsschlupfes $\sigma$. Im Bereich niedriger Querbeschleunigungen $a_q$ laufen die Fahrzeugräder der einzelnen Fahrzeugseiten näherungsweise auf identischen Bahnkurven, so daß die Drehzahl der Vorderräder $\Omega_{vl}$, $\Omega_{vr}$ und Hinterräder $\Omega_{hl}$, $\Omega_{hr}$ der jeweiligen Fahrzeugseiten

mit einer guten Näherung übereinstimmen, wenn die dynamischen Radradien $R_{dyn}$ gleich groß sind. Eine weitere Voraussetzung ist dabei, daß ein vernachlässigbarer Antriebs- und Bremsschlupf $\sigma$ auftritt. Da eine Abweichung der dynamischen Radradien von mehreren Rädern mit zunehmender Fahrzeuggeschwindigkeit $v_{Fzg}$ zu einer dem Betrage nach zunehmenden Drehzahldifferenz $\delta\Omega$ führt, ist es im Bereich niedriger Fahrzeuggeschwindigkeiten leichter möglich, aus der Differenz der Raddrehzahlen von Rädern einer Achse auf die Querbeschleunigung zurückzuschließen, da Drehzahldifferenzen aufgrund unterschiedlicher dynamischer Radradien in diesem Geschwindigkeitsbereich einen geringeren Betrag annehmen. Wird im Bereich niedriger Fahrzeuggeschwindigkeiten eine niedrige Querbeschleunigung erkannt, werden die Drehzahlen der Fahrzeugräder auf den einzelnen Fahrzeugseiten jeweils vorne und hinten angeglichen. Diese Angleichung kann dabei derart erfolgen, daß die Raddrehzahlen der Räder der Hinterachse mit einem Angleichungsfaktor derart versehen werden, daß die Drehzahl des hinteren rechten Rades mit der Drehzahl des vorderen rechten Rades übereinstimmt und daß die Drehzahl des hinteren linken Rades mit der Drehzahl des vorderen linken Rades übereinstimmt.

Anschließend wird im Bereich höherer Fahrzeuggeschwindigkeiten ein Abgleich der Raddrehzahlen vorgenommen, indem bei einer zumindest nahezu querbeschleunigungsfreien Fahrt des Fahrzeuges die Drehzahlen aller Fahrzeugräder relativ zu einem Bezugsrad festgelegt werden. Die querbeschleunigungsfreie Fahrt wird dabei erkannt, wenn die Differenz der an beiden Achsen gemittelten Raddrehzahlen gleich 0 wird.

Ein Ausführungsbeispiel des erfindungsgemäßen Verfahrens ist in der Zeichnung schematisch dargestellt und wird im folgenden näher beschrieben.

Fig. 1: einen möglichen Ablauf des erfindungsgemäßen Verfahrens und

Fig. 2: eine Darstellung der benötigten Radsensoren und eines Meßwertverarbeitungsgerätes zur Durchführung des erfindungsgemäßen Verfahrens.

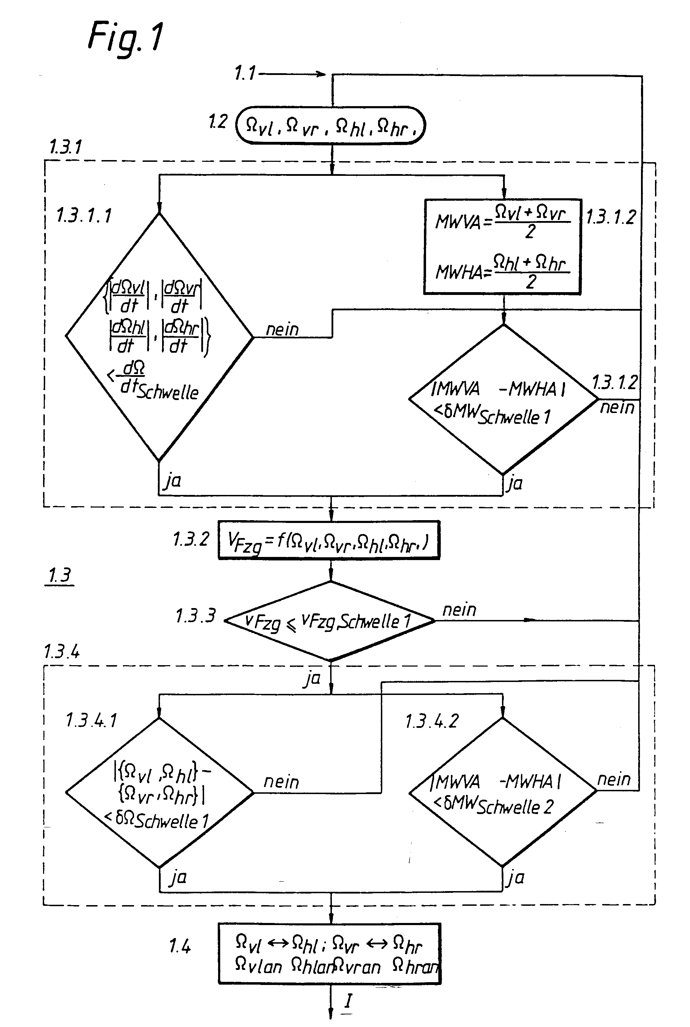

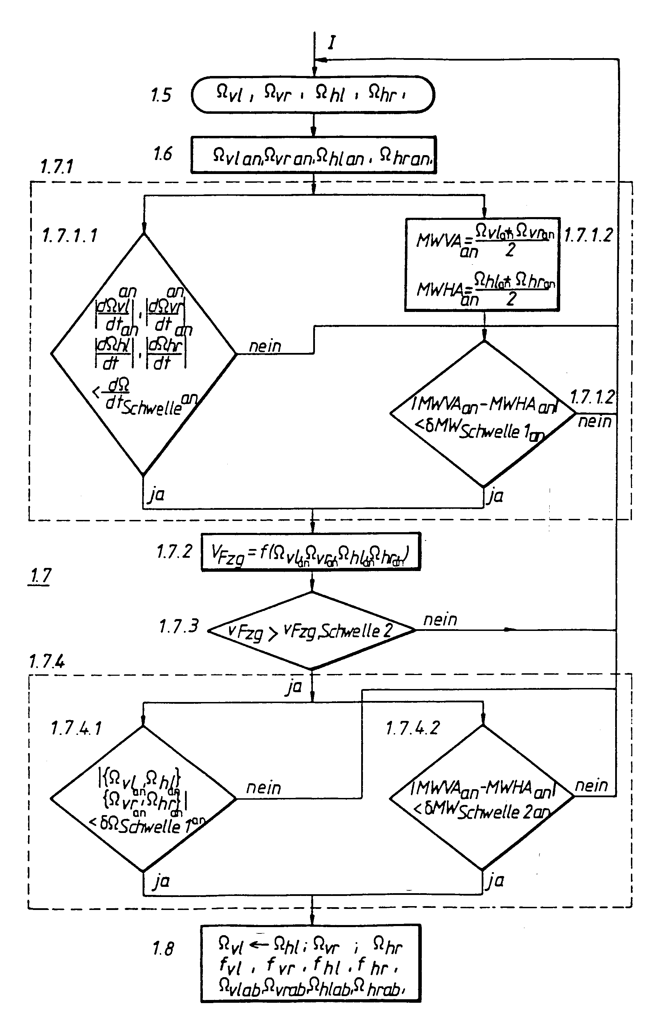

Wie aus Fig. 1 ersichtlich, werden bei dem erfindungsgemäßen Verfahren bei einem zweiachsigen Fahrzeug mit jeweils zwei Rädern an jeder Achse die Raddrehzahlen aller vier Räder erfaßt, wenn die Durchführung des Verfahrens durch das Signal 1.1 eingeleitet wurde. In dem Schritt 1.2 werden die Raddrehzahlen $\Omega_{vl}$, $\Omega_{vr}$, $\Omega_{hl}$ und $\Omega_{hr}$ gemessen.

In dem Schritt 1.3 wird aus den Raddrehzahlen $\Omega_{vl}$, $\Omega_{vr}$, $\Omega_{hl}$ und $\Omega_{hr}$ der Fahrzustand des Fahrzeuges abgeleitet. Dabei wird in dem Schritt 1.3.1 zunächst festgestellt, ob das Fahrzeug beschleunigt oder gebremst wird. Dies kann entsprechend dem Schritt 1.3.1.1 erfolgen, indem die gemessenen Raddrehzahlen $\Omega_{vl}$, $\Omega_{vr}$, $\Omega_{hl}$ und $\Omega_{hr}$ zeitlich differenziert werden. Liegt der Betrag der so ermittelten Radbeschleunigungen $d\Omega_{vl}/dt$, $d\Omega_{vr}/dt$, $d\Omega_{hl}/dt$ und $d\Omega_{hr}/dt$ unter einem vorgegeben Schwellwert $d\Omega/dt_{Schwelle}$, kann geschlossen werden, daß das Fahrzeug weder beschleunigt noch gebremst wird. Entsprechend dem Schritt 1.3.1.2 kann diese Überprüfung auch erfolgen, indem der Mittelwert MWVA der Raddrehzahlen der Vorderachse gebildet wird entsprechend der Gleichung:

$$MWVA = ( \Omega_{vl} + \Omega_{vr} ) / 2$$

sowie der Mittelwert MWHA der Raddrehzahlen der Hinterachse entsprechend der Gleichung:

$$MWHA = ( \Omega_{hl} + \Omega_{hr} ) / 2 .$$

Liegt der Betrag der Differenz der beiden Mittelwerte MWVA und MWHA unterhalb eines Schwellwertes $\delta MW_{Schwelle1}$, so kann daraus ebenfalls abgeleitet werden, daß das Fahrzeug weder beschleunigt noch gebremst wird. Wird in dem Schritt 1.3.1 erkannt, daß das Fahrzeug beschleunigt oder gebremst wird, wird das erfindungsgemäße Verfahren abgebrochen, indem eine Rückkehr zu dem Schritt 1.2 erfolgt. Andernfalls erfolgt ein Übergang zu dem Schritt 1.3.2.

In dem Schritt 1.3.2 wird aus wenigstens einer der gemessenen Raddrehzahlen $\Omega_{vl}$, $\Omega_{vr}$, $\Omega_{hl}$ und $\Omega_{hr}$ die Fahrzeuggeschwindigkeit $v_{Fzg}$ abgeleitet. In vorteilhafter Weise erfolgt dies, indem mehrere dieser Raddrehzahlen gemittelt werden. Dabei können besonders vorteilhaft die Raddrehzahlen der Räder der nicht angetriebenen Achse des Fahrzeuges verwendet werden.

Entsprechend dem Schritt 1.3.3 wird dann überprüft, ob die Fahrzeuggeschwindigkeit $v_{Fzg}$ unterhalb eines ersten Schwellwertes $v_{Fzg,Schwelle1}$ liegt. Eine mögliche Größenordnung für diesen Schwellwert $v_{Fzg,Schwelle1}$ liegt dabei in der Größenordnung von ca. 20-40km/h. Liegt die Fahrzeuggeschwindigkeit $v_{Fzg}$ über dem Schwellwert $v_{Fzg,Schwelle1}$, wird das erfindungsgemäße Verfahren abgebrochen, indem eine Rückkehr zu dem Schritt 1.2 erfolgt. Andernfalls erfolgt ein Übergang zu dem Schritt 1.3.4.

In dem Schritt 1.3.4 erfolgt eine Überprüfung, ob die Querbeschleunigung $a_q$ unterhalb eines vorgegebenen Schwellwertes $a_{q,Schwelle1}$ liegt. Diese Überprüfung kann dabei entsprechend dem Schritt 1.3.4.1 beispielsweise erfolgen, indem die Raddrehzahlen von Rädern einer Achse und verschiedenen Fahrzeugseiten miteinander verglichen werden. Überschreitet der Betrag dieser Differenz einen vorgegebenen Schwellwert $\delta\Omega_{Schwelle1}$, wird das erfindungsgemäße Verfahren abgebrochen und es erfolgt eine Rückkehr zu dem Schritt 1.2. Andernfalls wird das Verfahren mit der Durchführung des Schrittes 1.4 fortgesetzt. Eine andere Möglichkeit zur Überprüfung der Querbeschleunigung besteht entsprechend dem Schritt 1.3.4.2 darin, den Betrag der Differenz der Mittelwerte der Raddrehzahlen der Räder der beiden Achsen MMHA und MWVA mit einem vorgegebenen Schwellwert $\delta MW_{Schwelle2}$ zu vergleichen. Bei zunehmender Querbeschleunigung $a_q$ ergibt sich aufgrund eines unter- bzw. übersteuernden Fahrverhaltens, daß die Räder derselben Fahrzeugseite an der Vorder- und Hinterachse auf unterschiedlichen Bahnkurven laufen und somit unterschiedliche Raddrehzahlen aufweisen, d.h., daß das erfindungsgemäße Verfahren abgebrochen wird, wenn der Betrag der Differenz der Mittelwerte der Raddrehzahlen der Räder der beiden Achsen MWHA und MWVA oberhalb des vorgegebenen Schwellwertes $\delta MW_{Schwelle2}$ liegt.

Andernfalls wird das erfindungsgemäße Verfahren mit der Durchführung des Schrittes 1.4 fortgesetzt. Es ist selbstverständlich möglich, den Schritt 1.3.4.2 mit dem Schritt 1.3.1.2 zusammenzufassen, da die Überprüfung identisch ist, wobei sich die zu untersuchenden Schwellwerte $\delta MW_{Schwelle1}$ und $\delta MW_{Schwelle2}$ allerdings unterscheiden können.

Entsprechend dem Schritt 1.4 erfolgt eine Angleichung der Raddrehzahlen, indem die Raddrehzahlen der Räder der Hinterachse mit jeweils einem Angleichungsfaktor derart versehen werden, daß die Drehzahl des hinteren rechten Rades mit der Drehzahl des vorderen rechten Rades übereinstimmt und daß die Drehzahl des hinteren linken Rades mit der Drehzahl des vorderen linken Rades übereinstimmt. Selbstverständlich ist es auch möglich, die Räder der Vorderachse mit jeweils einem Angleichungsfaktor zu versehen, so daß die Drehzahl des vorderen rechten Rades mit der Drehzahl des hinteren rechten Rades übereinstimmt und daß die Drehzahl des vorderen linken Rades mit der Drehzahl des hinteren linken Rades übereinstimmt. Es ergeben sich somit aufgrund der Angleichungsfaktoren aus gemessenen Raddrehzahlen $\Omega_{vl}$, $\Omega_{vr}$, $\Omega_{hl}$ und $\Omega_{hr}$ angeglichene Raddrehzahlen $\Omega_{vlan}$, $\Omega_{vran}$, $\Omega_{hlan}$ und $\Omega_{hran}$.

In dem zweiten Teil des erfindungsgemäßen Verfahrens werden in dem Ausführungsbeispiel der Fig. 1 entsprechend dem Schritt 1.5 die Raddrehzahlen $\Omega_{vl}$, $\Omega_{vr}$, $\Omega_{hl}$ und $\Omega_{hr}$ erneut gemessen. In dem Schritt 1.6 werden dann entsprechend den in dem Schritt 1.4 bestimmten Angleichungsfaktoren aus diesen gemessenen Raddrehzahlen $\Omega_{vl}$, $\Omega_{vr}$, $\Omega_{hl}$ und $\Omega_{hr}$ angeglichene Raddrehzahlen $\Omega_{vlan}$, $\Omega_{vran}$, $\Omega_{hlan}$ und $\Omega_{hran}$ abgeleitet.

In dem Schritt 1.7 wird aus den abgeleiteten angeglichenen Raddrehzahlen $\Omega_{vlan}$, $\Omega_{vran}$, $\Omega_{hlan}$ und $\Omega_{hran}$ der Fahrzustand des Fahrzeuges abgeleitet.

Dabei wird in dem Schritt 1.7.1 zunächst festgestellt, ob das Fahrzeug beschleunigt oder gebremst wird.

Dies kann entsprechend dem Schritt 1.7.1.1 erfolgen, indem die angeglichenen Raddrehzahlen $\Omega_{vlan}$, $\Omega_{vran}$, $\Omega_{hlan}$ und $\Omega_{hran}$ zeitlich differenziert werden. Liegt der Betrag der so ermittelten Radbeschleunigungen $d\Omega_{vlan}/dt$, $d\Omega_{vran}/dt$, $d\Omega_{hlan}/dt$ und $d\Omega_{hran}/dt$ unter einem vorgegeben Schwellwert $d\Omega/dt_{Schwellean}$, kann geschlossen werden, daß das Fahrzeug weder beschleunigt noch gebremst wird. Lediglich aus Gründen der Darstellung in der Zeichnung wurde der Index "an" dort hochgestellt. Entsprechend dem Schritt 1.7.1.2 kann diese Überprüfung auch erfolgen, indem der Mittelwert $MWVA_{an}$ der Raddrehzahlen der Vorderachse gebildet wird entsprechend der Gleichung:

$$MWVA_{an} = ( \Omega_{vlan} + \Omega_{vran} ) / 2$$

sowie der Mittelwert $MWHA_{an}$ der Raddrehzahlen der Hinterachse entsprechend der Gleichung:

$$MWHA_{an} = ( \Omega_{hlan} + \Omega_{hran} ) / 2 .$$

Liegt der Betrag der Differenz der beiden Mittelwerte $MWVA_{an}$ und $MWHA_{an}$ unterhalb eines Schwellwertes $\delta MW_{Schwelle1an}$, so kann daraus ebenfalls abgeleitet werden, daß das Fahrzeug weder beschleunigt noch gebremst wird. Wird in dem Schritt 1.7.1 erkannt, daß das Fahrzeug beschleunigt oder gebremst wird, wird der zweite Teile des erfindungsgemäßen Verfahrens abgebrochen, indem eine Rückkehr zu dem Schritt 1.5 erfolgt. Andernfalls erfolgt ein Übergang zu dem Schritt 1.7.2.

In dem Schritt 1.7.2 wird aus wenigstens einer der abgeleiteten angeglichenen Raddrehzahlen $\Omega_{vlan}$, $\Omega_{vran}$, $\Omega_{hlan}$ und $\Omega_{hran}$ die Fahrzeuggeschwindigkeit $v_{Fzg}$ abgeleitet. In vorteilhafter Weise erfolgt dies, indem mehrere dieser abgeleiteten angeglichenen Raddrehzahlen gemittelt werden. Dabei können besonders vorteilhaft die Raddrehzahlen der Räder der nicht angetriebenen Achse des Fahrzeuges verwendet werden.

Entsprechend dem Schritt 1.7.3 wird dann überprüft, ob die Fahrzeuggeschwindigkeit $v_{Fzg}$ oberhalb eines Schwellwertes $v_{Fzg,Schwelle2}$ liegt. Eine mögliche Größenordnung für diesen Schwellwert $v_{Fzg,Schwelle2}$ liegt dabei in der Größenordnung von ca. 60-80 km/h. Liegt die Fahrzeuggeschwindigkeit $v_{Fzg}$ unterhalb des Schwellwertes $v_{Fzg,Schwelle2}$, wird der zweite Teil des erfindungsgemäßen Verfahrens abgebrochen, indem eine Rückkehr zu dem Schritt 1.5 erfolgt. Andernfalls erfolgt ein Übergang zu dem Schritt 1.7.4.

In dem Schritt 1.7.4 erfolgt eine Überprüfung, ob die Querbeschleunigung $a_q$ unterhalb eines vorgegebenen Schwellwertes $a_{q,Schwelle1an}$ liegt. Diese Überprüfung kann dabei entsprechend dem Schritt 1.7.4.1 beispielsweise erfolgen, indem die Raddrehzahlen von Rädern einer Achse und verschiedenen Fahrzeugseiten miteinander verglichen werden. Überschreitet der Betrag dieser Differenz einen vorgegebenen Schwellwert $\delta\Omega_{Schwelle1an}$, wird der zweite Teil des erfindungsgemäßen Verfahrens abgebrochen und es erfolgt eine Rückkehr zu dem Schritt 1.5. Andernfalls wird das Verfahren mit der Durchführung des Schrittes 1.8 fortgesetzt. Eine andere Möglichkeit zur Überprüfung der Querbeschleunigung besteht entsprechend dem Schritt 1.7.4.2 darin, den Betrag der Differenz der Mittelwerte der Raddrehzahlen der Räder der beiden Achsen $MWHA_{an}$ und $MWVA_{an}$ mit einem vorgegebenen Schwellwert $\delta MW_{Schwelle2an}$ zu vergleichen. Bei zunehmender Querbeschleunigung $a_q$ ergibt sich aufgrund eines unter- bzw. übersteuernden Fahrverhaltens, daß die Räder derselben Fahrzeugseite an der Vorder- und Hinterachse auf unterschiedlichen Bahnkurven laufen und somit unterschiedliche Raddrehzahlen aufweisen, d.h., daß der zweite Teil des erfindungsgemäßen Verfahrens abgebrochen wird, wenn der Betrag der Differenz der Mittelwerte der Raddrehzahlen der Räder der beiden Achsen $MWHA_{an}$ und $MWVA_{an}$ oberhalb des vorgegebenen Schwellwertes $\delta MW_{Schwelle2an}$ liegt. Andernfalls wird das erfindungsgemäße Verfahren mit der Durchführung des Schrittes 1.8 fortgesetzt. Es ist selbstverständlich möglich, den Schritt 1.7.4.2 mit dem Schritt 1.7.1.2 zusammenzufassen, da die Überprüfung identisch ist, wobei sich die zu untersuchenden Schwellwerte $\delta MW_{Schwelle1an}$ und $\delta MW_{Schwelle2an}$ allerdings unterscheiden können.

In dem Schritt 1.8 erfolgt dann ein Abgleich der im Schritt 1.5 gemessenen Raddrehzahlen derart, daß die Drehzahlen aller Fahrzeugräder auf ein Bezugsrad durch Bestimmung des jeweils zugehörigen Abgleichsfaktors $f_{vl}$, $f_{vr}$, $f_{hl}$ und $f_{hr}$ abgeglichen werden. In dem Ausführungsbeispiel der Fig. 1 ist dabei dargestellt, daß das vordere rechte Rad, das hintere linke Rad und das hintere rechte Rad auf das vordere linke Rad als Bezugsrad abgeglichen werden. Das heißt dann also, daß die abgeglichenen Raddrehzahlen $\Omega_{vlab}$, $\Omega_{vrab}$, $\Omega_{hlab}$ und $\Omega_{hrab}$ mit der gemessenen Raddrehzahl $\Omega_{vl}$ des Bezugsrades übereinstimmen. Allerdings ist es auch möglich, eines der anderen Räder als Bezugsrad auszuwählen und entsprechend die anderen Räder auf dieses Bezugsrad abzugleichen. Es ergeben sich somit die abgeglichenen Raddrehzahlen $\Omega_{vlab}$, $\Omega_{vrab}$, $\Omega_{hlab}$ und $\Omega_{hrab}$ aus den gemessenen Raddrehzahlen $\Omega_{vl}$, $\Omega_{vr}$, $\Omega_{hl}$ und $\Omega_{hr}$.

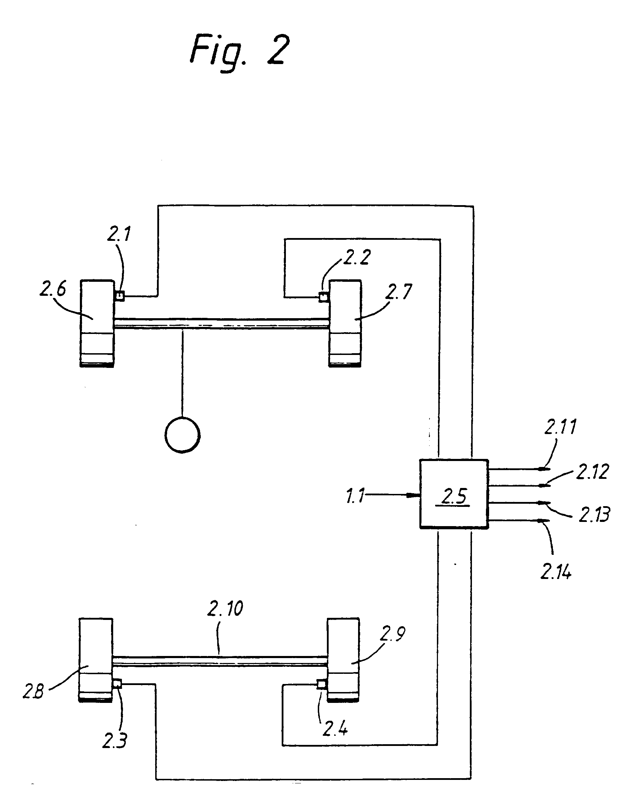

Der Darstellung der Fig. 2 kann eine Anordnung von Sensoren 2.1, 2.2, 2.3 und 2.4 mit einem zugehörigen Meßwertverarbeitungsgerät 2.5 entnommen werden zur Durchführung des erfindungsgemäßen Verfahrens. Fig. 2 zeigt eine Anordnung von Sensoren, bei der jedem Rad 2.6, 2.7, 2.8 und 2.9 ein Sensor 2.1, 2.2, 2.3 und 2.4 zur Messung der Raddrehzahl zugeordnet ist. Selbstverständlich ist es auch möglich einen entsprechenden Abgleich der gemessen Raddrehzahlen $\Omega_{vl}$, $\Omega_{vr}$, $\Omega_{hl}$ und $\Omega_{hr}$ durchzuführen, wenn beispielsweise die beiden Sensoren 2.3 und 2.4 der Räder 2.8 und 2.9 der Hinterachse 2.10 zu einem Sensor vereinigt werden, mit dem dann beispielsweise die Drehzahl der Hinterachsantriebswelle gemessen wird. In dem Meßwertverarbeitungsgerät wird dabei das erfindungsgemäße Verfahren durchgeführt, wenn das Signal 1.1 auftritt. Unterschiedliche dynamische Radradien treten außer bei Reifendefekten durch Luftdruckverlust im Reifen und durch die Abnutzung der Reifen auf. Dieses Signal 1.1 kann dabei nach einer bestimmten von dem Fahrzeug zurückgelegten Kilometerzahl oder in bestimmten Zeitabständen erzeugt werden, wobei die Zeitabstände und die Kilometerzahl zweckmäßigerweise so gewählt werden, daß man aufgrund der allgemeinen Verhältnisse mit einem Luftdruckverlust rechnen kann, der sich in einer Änderung der dynamischen Radradien niederschlägt. Dee von dem Meßwertverarbeitungsgeräte 2.5 ausgehenden Ausgangssignale 2.11, 2.12, 2.13 und 2.14 repräsentieren die bei dem Verfahrensablauf gemäß Fig. 1 in dem Schritt 1.8 bestimmten Abgleichsfaktoren $f_{vl}$, $f_{vr}$, $f_{hl}$ und $f_{hr}$ und werden dann verwendet, um in der Folge gemessene Raddrehzahlen $\Omega_{vl}$, $\Omega_{vr}$, $\Omega_{hl}$ und $\Omega_{hr}$ abzugleichen, indem die entsprechenden gemessenen Raddrehzahlen $\Omega_{vl}$, $\Omega_{vr}$, $\Omega_{hl}$ und $\Omega_{hr}$ mit den bestimmten Abgleichsfaktoren $f_{vl}$, $f_{vr}$, $f_{hl}$ und $f_{hr}$ multipliziert werden, so daß sich daraus die abgeglichenen Raddrehzahlen $\Omega_{vlab}$, $\Omega_{vrab}$, $\Omega_{hlab}$ und $\Omega_{hrab}$ ergeben. Somit können unterschiedliche dynamische Radradien $R_{dyn}$ der einzelnen Räder ausgeglichen werden. Die dieserart abgeglichenen Raddrehzahlen $\Omega_{vlab}$, $\Omega_{vrab}$, $\Omega_{hlab}$ und $\Omega_{hrab}$ können dann in vorteilhafter Weise als Eingangssignale für Steuerungen bzw. Regelungen von Fahrwerkssystemen wie z.B. AntiBlockierSystemen (ABS), AntriebsSchlupfRegelungen (ASR) oder anderen Systemen eingesetzt werden. In dem Ausführungsbeispiel der Fig. 1 wurden in dem Schritt 1.8 alle Fahrzeugräder auf das linke vordere Rad als Bezugsrad abgeglichen. Somit ergeben sich also in diesem Fall die Abgleichsfaktoren $f_{vl}$, $f_{vr}$, $f_{hl}$ und $f_{hr}$ entsprechend den Gleichungen:

$f_{vl} = \Omega_{vl}/\Omega_{vl}$, $f_{vr} = \Omega_{vr}/\Omega_{vl}$, $f_{hl} = \Omega_{hl}/\Omega_{vl}$ und $f_{hr} = \Omega_{hr}/\Omega_{vl}$,

d.h. also insbesondere, daß im Ausführungsbeispiel der Fig. 1 der Abgleichsfaktor $f_{vl}$ gleich 1 ist.

**Patentansprüche**

1. Verfahren zur Korrektur der durch Radsensoren ermittelten Drehgeschwindigkeiten von Fahrzeugrädern,

- wobei eine Messung von Raddrehzahlen $\Omega_{vl}$, $\Omega_{vr}$, $\Omega_{hl}$, $\Omega_{hr}$ der Räder eines Fahrzeuges erfolgt,

- wobei unter definierten Fahrbedingungen Abgleichsfaktoren der einzelnen Räder bestimmt werden,

- wobei die definierten Fahrbedingungen darin bestehen, daß das Fahrzeug weder beschleunigt noch gebremst wird und keine Querbeschleunigung aufweist,

**dadurch gekennzeichnet,**

- daß in einem ersten Teil des Verfahrens ein Angleichen der gemessenen (Schritt 1.2) Raddrehzahlen $\Omega_{vl}$, $\Omega_{vr}$, $\Omega_{hl}$, $\Omega_{hr}$ unter den definierten Fahrbedingungen erfolgt, wenn die Bedingung (Schritt 1.3.3) erfüllt ist, daß sich die Fahrzeuggeschwindigkeit $v_{Fzg}$ unterhalb eines ersten Schwellwertes $v_{Fzg,Schwelle1}$ befindet, wobei die Fahrzeuggeschwindigkeit $v_{Fzg}$ und die definierten Fahrbedingungen aus den gemessenen Raddrehzahlen $\Omega_{vl}$, $\Omega_{vr}$, $\Omega_{hl}$, $\Omega_{hr}$ ermittelt werden,

- wobei das Angleichen der gemessenen (Schritt 1.2) Raddrehzahlen $\Omega_{vl}$, $\Omega_{vr}$, $\Omega_{hl}$, $\Omega_{hr}$ derart erfolgt (Schritt 1.4), daß für jede der beiden Fahrzeugseiten jeweils ein Angleichungsfaktor bestimmt wird, so daß sich aus den gemessenen Raddrehzahlen $\Omega_{vl}$, $\Omega_{vr}$, $\Omega_{hl}$, $\Omega_{hr}$ angeglichene Raddrehzahlen $\Omega_{vlan}$, $\Omega_{vran}$, $\Omega_{hlan}$, $\Omega_{hran}$ ergeben,

  - wobei eine der angeglichenen Raddrehzahlen $\Omega_{vlan}$, $\Omega_{hlan}$ der linken Fahrzeugseite gleich der zugehörigen gemessenen Raddrehzahl $\Omega_{vl}$, $\Omega_{hl}$ ist und sich die andere der beiden angeglichenen Raddrehzahlen $\Omega_{vlan}$, $\Omega_{hlan}$ der linken Fahrzeugseite aus der zugehörigen gemessenen Raddrehzahl $\Omega_{vl}$, $\Omega_{hl}$ durch Multiplikation mit dem Angleichungsfaktor der linken Fahrzeugseite derart ergibt, daß die beiden angeglichenen Raddrehzahlen $\Omega_{vlan}$, $\Omega_{hlan}$ der linken Fahrzeugseite den gleichen Wert annehmen und

  - wobei eine der angeglichenen Raddrehzahlen $\Omega_{vran}$, $\Omega_{hran}$ der rechten Fahrzeugseite gleich der zugehörigen gemessenen Raddrehzahl $\Omega_{vr}$, $\Omega_{hr}$ ist und sich die andere der beiden angeglichenen Raddrehzahlen $\Omega_{vran}$, $\Omega_{hran}$ der rechten Fahrzeugseite aus der zugehörigen gemessenen Raddrehzahl $\Omega_{vr}$, $\Omega_{hr}$ durch Multiplikation mit dem Angleichungsfaktor der rechten Fahrzeugseite derart ergibt, daß die bei-

den angeglichenen Raddrehzahlen $\Omega_{vran}$, $\Omega_{hran}$ der rechten Fahrzeugseite den gleichen Wert annehmen,

- daß in einem zweiten Teil des Verfahrens ein Abgleichen der erneut gemessenen (Schritt 1.5) Raddrehzahlen $\Omega_{vl}$, $\Omega_{vr}$, $\Omega_{hl}$, $\Omega_{hr}$ unter den definierten Fahrbedingungen erfolgt, wenn die Bedingung (Schritt 1.7.3) erfüllt ist, daß sich die Fahrzeuggeschwindigkeit $v_{Fzg}$ oberhalb eines Schwellwertes $v_{Fzg,Schwelle2}$ befindet,
  - wobei die Fahrzeuggeschwindigkeit und die definierten Fahrbedingungen aus den erneut gemessenen (Schritt 1.5) Raddrehzahlen $\Omega_{vl}$, $\Omega_{vr}$, $\Omega_{hl}$, $\Omega_{hr}$ unter Berücksichtigung der Angleichungsfaktoren (Schritt 1.4) ermittelt werden und
  - wobei das Abgleichen derart erfolgt (Schritt 1.8), daß eines der Räder als Bezugsrad festgelegt wird und für jedes Rad ein Abgleichsfaktor $f_{vl}$, $f_{vr}$, $f_{hl}$ und $f_{hr}$ (2.11, 2.12, 2.13, 2.14) zu diesem Bezugsrad derart bestimmt wird, daß die abgeglichene Raddrehzahl mit der Raddrehzahl des Bezugsrades übereinstimmt und
- daß die in der Folge gemessenen Raddrehzahlen $\Omega_{vl}$, $\Omega_{vr}$, $\Omega_{hl}$, $\Omega_{hr}$ durch Multiplikation mit den in dem zweiten Teil des Verfahrens bestimmten Abgleichsfaktoren $f_{vl}$, $f_{vr}$, $f_{hl}$ und $f_{hr}$ (2.11, 2.12, 2.13, 2.14) korrigiert werden.

2. Verfahren nach Anspruch 1,
   **dadurch gekennzeichnet,**
   daß die Abgleichsfaktoren $f_{vl}$, $f_{vr}$, $f_{hl}$ und $f_{hr}$ - (2.11, 2.12, 2.13, 2.14) in bestimmten Zeitabständen aktualisiert werden.

3. Verfahren nach Anspruch 1,
   **dadurch gekennzeichnet,**
   daß die Abgleichsfaktoren $f_{vl}$, $f_{vr}$, $f_{hl}$ und $f_{hr}$ - (2.11, 2.12, 2.13, 2.14) nach einer bestimmten durch das Fahrzeug zurückgelegten Wegstrecke aktualisiert werden.

4. Verfahren nach Anspruch 2 und 3,
   **dadurch gekennzeichnet,**
   daß ein Kriterium für die Aktualisierung der Abgleichsfaktoren $f_{vl}$, $f_{vr}$, $f_{hl}$ und $f_{hr}$ (2.11, 2.12, 2.13, 2.14) bestimmt wird, indem eine gewichtete Betrachtung des Zeitabstandes der letzten Aktualisierung der Abgleichsfaktoren $f_{vl}$, $f_{vr}$, $f_{hl}$ und $f_{hr}$ (2.11, 2.12, 2.13, 2.14) und der nach dieser letzten Aktualisierung durch das Fahrzeug zurückgelegten Wegstrecke erfolgt.

5. Verfahren nach einem der Ansprüche 1 bis 4,
   **dadurch gekennzeichnet,**
   daß der erste Teil der definierten Fahrbedingungen (Schritt 1.3.1), daß das Fahrzeug weder beschleunigt noch gebremst wird, im ersten Teil des Verfahrens abgeleitet wird (Schritt 1.3.1.1), wenn die aus der/den gemessenen Raddrehzahlen $\Omega_{vl}$, $\Omega_{vr}$, $\Omega_{hl}$, $\Omega_{hr}$ gebildete(n) Radbeschleunigung(en) $d\Omega_{vl}/dt$, $d\Omega_{vr}/dt$, $d\Omega_{hl}/dt$ und $d\Omega_{hr}/dt$ unter einem Schwellwert $d\Omega/dt_{Schwelle}$ liegen.

6. Verfahren anch einem der Ansprüche 1 bis 4,
   **dadurch gekennzeichnet,**
   daß der erste Teil der definierten Fahrbedingungen (Schritt 1.3.1), daß das Fahrzeug weder beschleunigt noch gebremst wird, im ersten Teil des Verfahrens abgeleitet wird (Schritt 1.3.1.2), wenn der Betrag der Differenz der beiden Mittelwerte MWVA der Raddrehzahlen der Vorderachse und MWHA der Raddrehzahlen der Hinterachse unterhalb eines Schwellwertes $\delta MW_{Schwelle1}$ liegt.

7. Verfahren nach einem der Ansprüche 1 bis 6
   **dadurch gekennzeichnet,**
   daß der zweite Teil der definierten Fahrbedingungen (Schritt 1.3.4), daß das Fahrzeug keine Querbeschleunigung aufweist, im ersten Teil des Verfahrens abgeleitet wird (Schritt 1.3.4.2), wenn der Betrag der Differenz der beiden Mittelwerte MWVA der Raddrehzahlen der Vorderachse und MWHA der Raddrehzahlen der Hinterachse unterhalb eines Schwellwertes $\delta MW_{Schwelle2}$ liegt.

8. Verfahren nach einem der Ansprüche 1 bis 6,
   **dadurch gekennzeichnet,**
   daß der zweite Teil der definierten Fahrbedingungen (Schritt 1.3.4), daß das Fahrzeug keine Querbeschleunigung aufweist, im ersten Teil des Verfahrens abgeleitet wird (Schritt 1.3.4.1), wenn der Betrag der Differenz von Raddrehzahlen von Rädern einer Achse und verschiedenen Fahrzeugseiten einen Schwellwert $\delta\Omega_{Schwelle1}$ unterschreitet.

9. Verfahren nach einem der Ansprüche 1 bis 8,
   **dadurch gekennzeichnet,**
   daß der erste Teil der definierten Fahrbedingungen (Schritt 1.7.1), daß das Fahrzeug weder beschleunigt noch gebremst wird, im zweiten Teil des Verfahrens abgeleitet wird (Schritt 1.7.1.1), wenn die aus der/den angeglichenen Raddrehzahlen $\Omega_{vlan}$, $\Omega_{vran}$, $\Omega_{hlan}$, $\Omega_{hran}$ gebildete(n) Radbeschleunigung(en) $d\Omega_{vlan}/dt$, $d\Omega_{vran}/dt$, $d\Omega_{hlan}/dt$ und $d\Omega_{hran}/dt$ unter einem Schwellwert $d\Omega/dt_{Schwellean}$ liegen.

**10.** Verfahren anch einem der Ansprüche 1 bis 8, **dadurch gekennzeichnet,** daß der erste Teil der definierten Fahrbedingungen (Schritt 1.7.1), daß das Fahrzeug weder beschleunigt noch gebremst wird, im zweiten Teil des Verfahrens abgeleitet wird (Schritt 1.7.1.2), wenn der Betrag der Differenz der beiden Mittelwerte $MWVA_{an}$ der Raddrehzahlen der Vorderachse und $MWHA_{an}$ der Raddrehzahlen der Hinterachse unterhalb eines Schwellwertes $\delta MW_{Schwelle1an}$ liegt.

**11.** Verfahren nach einem der Ansprüche 1 bis 10, **dadurch gekennzeichnet,** daß der zweite Teil der definierten Fahrbedingungen (Schritt 1.7.4), daß das Fahrzeug keine Querbeschleunigung aufweist, im zweiten Teil des Verfahrens abgeleitet wird (Schritt 1.7.4.2), wenn der Betrag der Differenz der beiden Mittelwerte $MWVA_{an}$ der Raddrehzahlen der Vorderachse und $MWHA_{an}$ der Raddrehzahlen der Hinterachse unterhalb eines Schwellwertes $\delta MW_{Schwelle2an}$ liegt.

**12.** Verfahren nach einem der Ansprüche 1 bis 10, **dadurch gekennzeichnet,** daß der zweite Teil der definierten Fahrbedingungen (Schritt 1.7.4), daß das Fahrzeug keine Querbeschleunigung aufweist, im zweiten Teil des Verfahrens abgeleitet wird (Schritt 1.7.4.1), wenn der Betrag der Differenz von angeglichenen Raddrehzahlen von Rädern einer Achse und verschiedenen Fahrzeugseiten einen Schwellwert $\delta \Omega_{Schwelle1an}$ unterschreitet.

**13.** Verfahren nach einem der Ansprüche 1 bis 12, **dadurch gekennzeichnet**, daß der erste Teil der definierten Fahrbedingungen (Schritte 1.3.1, 1.7.1), daß das Fahrzeug weder beschleunigt noch gebremst wird, aus den Ansteuersignalen eines AntiBlockierSystems (ABS) und/oder einer AntriebsSchlupfRegelung (ASR) abgeleitet wird.

## Claims

**1.** A method for correcting the rotation speeds of vehicle wheels as indicated by wheel sensors,
- in which the speeds $\Omega_{vl}$, $\Omega_{vr}$, $\Omega_{hl}$, $\Omega_{hr}$ of the wheels of a vehicle are measured,
- in which, under defined travel conditions, correction factors are determined for the individual wheels,
- in which the defined travel conditions are that the vehicle is being neither accelerated nor braked and there is no radial acceleration,
**characterised in that,**

- during a first part of the method, the (step 1.2) wheel speeds $\Omega_{vl}$, $\Omega_{vr}$, $\Omega_{hl}$, $\Omega_{hr}$ measured under the defined travel conditions are balanced, provided (step 1.3.3) the vehicle speed $v_{Fzg}$ is below a first threshold value $v_{Fzg,threshold1}$, the vehicle speed $v_{Fzg}$ and the defined travel conditions being derived from the measured wheel speeds $\Omega_{vl}$, $\Omega_{vr}$, $\Omega_{hl}$, $\Omega_{hr}$,
  - in which the measured (step 1.2) wheel rotation speeds $\Omega_{vl}$, $\Omega_{vr}$, $\Omega_{hl}$, $\Omega_{hr}$ are balanced so that (step 1.4) a correction factor is determined for each of the two sides of the vehicle respectively, to obtain balanced wheel speeds $\Omega_{vlan}$, $\Omega_{vran}$, $\Omega_{hlan}$, $\Omega_{hran}$ on the basis of the measured wheel speeds $\Omega_{vl}$, $\Omega_{vr}$, $\Omega_{hl}$, $\Omega_{hr}$
  - in which one of the balanced wheel speeds $\Omega_{vlan}$, $\Omega_{hlan}$ of the left-hand side of the vehicle is equal to the respective measured wheel speed $\Omega_{vl}$, $\Omega_{hl}$ and the other of the two balanced wheel speeds $\Omega_{vlan}$, $\Omega_{hlan}$ of the left-hand side of the vehicle is derived from the respective measured wheel speed $\Omega_{vl}$, $\Omega_{hl}$ by multiplying it by the correction factor of the left-hand side of the vehicle so that both the balanced wheel speeds $\Omega_{vlan}$, $\Omega_{hlan}$ of the left-hand side of the vehicle assume the same value and
  - in which one of the balanced wheel speeds $\Omega_{vran}$, $\Omega_{hran}$ of the right-hand side of the vehicle is equal to the respective measured wheel speed $\Omega_{vr}$, $\Omega_{hr}$ and the other of the two balanced wheel speeds $\Omega_{vran}$, $\Omega_{hran}$ of the right-hand side of the vehicle is derived from the respective measured wheel speed $\Omega_{vr}$, $\Omega_{hr}$ by multiplying it by the correction factor of the right-hand side of the vehicle so that the two balanced wheel speeds $\Omega_{vran}$, $\Omega_{hran}$ of the right-hand side of the vehicle assume the same value,
- during a second part of the method, the (step 1.5) wheel speeds $\Omega_{vl}$, $\Omega_{vr}$, $\Omega_{hl}$, $\Omega_{hr}$ measured again under the defined travel conditions are adjusted provided (step 1.7.3) that the vehicle speed $v_{Fzg}$ is above a threshold value $v_{Fzg,threshold2}$,
  - so that the vehicle speed and the defined travel conditions are derived from the remeasured (step 1.5) wheel speeds $\Omega_{vl}$, $\Omega_{vr}$, $\Omega_{hl}$, $\Omega_{hr}$ correlated with the correction factor (step 1.4) and

- so that the adjustment is made (step 1.8) by establishing one of the wheels as being the reference wheel and applying to each wheel a correction factor $f_{vl}$, $f_{vr}$, $f_{hl}$ and $f_{hr}$ (2.11, 2.12, 2.13, 2.14) linked to this reference wheel so that the adjusted wheel speeds match the wheel speed of the reference wheel and
- the resulting measured wheel speeds $\Omega_{vl}$, $\Omega_{vr}$, $\Omega_{hl}$, $\Omega_{hr}$, are adjusted by multiplying them with the correction factors $f_{vl}$, $f_{vr}$, $f_{hl}$ and $f_{hr}$ (2.11, 2.12, 2.13, 2.14) calculated in the second part of the method.

2. A method as claimed in claim 1, **characterised in that** the correction factors $f_{vl}$, $f_{vr}$, $f_{hl}$, and $f_{hr}$ (2.11, 2.12, 2.13, 2.14) are updated at given time intervals.

3. A method as claimed in claim 1, **characterised in that** the adjustment factors $f_{vl}$, $f_{vr}$, $f_{hl}$ and $f_{hr}$, (2.11, 2.12, 2.13, 2.14) are updated when the vehicle has travelled a given distance.

4. A method as claimed in claim 2 and 3, **characterised in that** a criterion for updating the correction factors $f_{vl}$, $f_{vr}$, $f_{hl}$ and $f_{hr}$ (2.11, 2.12, 2.13, 2.14) is determined by correlating the time interval since the last update of the correction factors $f_{vl}$, $f_{vr}$, $f_{hl}$ and $f_{hr}$ (2.11, 2.12, 2.13, 2.14) with the distance covered by the vehicle since this last update.

5. A method as claimed in claims 1 to 4, **characterised in that** the first part of the defined travel conditions (step 1.3.1), that the vehicle is being neither accelerated nor braked, is determined in the first part of the method (step 1.3.1.1) provided that the wheel acceleration(s) $d\Omega_{vl}/dt$, $\Omega_{vr}/dt$, $\Omega_{hl}/dt$, $\Omega_{hr}/dt$ derived from the measured wheel speed or speeds $\Omega_{vl}$, $\Omega_{vr}$, $\Omega_{hl}$, $\Omega_{hr}$ is(are) below a threshold value $d\Omega/dt_{threshold}$.

6. A method as claimed in one of claims 1 to 4, **characterised in that** the first part of the defined travel conditions (step 1.3.1.), that the vehicle is being neither accelerated nor braked, is determined in the first part of the method (step 1.3.1.2) provided that the value of the difference between the two mean values MWVA of the wheel speeds of the front axle and MWHA of the wheel speeds of the rear axle is below a threshold value $\delta MW_{threshold1}$.

7. A method as claimed in one of claims 1 to 6, **characterised in that** the second part of the defined travel conditions (step 1.3.4), that there is no radial acceleration on the vehicle, is determined in the first part of the method (step 1.3.4.2) if the value of the difference between the two mean values MWVA of the wheel speeds of the front axle and MWHA of the wheel speeds of the rear axle is below a threshold value $\delta MW_{threshold2}$.

8. A method as claimed in one of claims 1 to 6, **characterised in that** the second part of the defined travel conditions (step 1.3.4), that there is no radial acceleration on the vehicle, is determined in the first part of the method (step 1.3.4.1) if the value of the difference between the wheel speeds of wheels of an axle and different sides of the vehicle is below a threshold $\delta\Omega_{threshold1}$.

9. A method as claimed in one of claims 1 to 8, **characterised in that** the first part of the defined travel conditions (step 1.7.1), that the vehicle is being neither accelerated nor braked, is determined in the second part of the method (step 1.7.1.1) if the wheel acceleration(s) $d\Omega_{vlan}/dt$, $d\Omega_{vran}/dt$, $d\Omega_{hlan}/dt$ and $d\Omega_{hran}/dt$ derived from the corrected wheel speed(s) $\Omega_{vlan}$, $\Omega_{vran}$, $\Omega_{hlan}$, $\Omega_{hran}$ is(are) below a threshold $d\Omega/dt_{thresholdan}$.

10. A method as claimed in one of claims 1 to 8, **characterised in that** the first part of the defined travel conditions (step 1.7.1), that the car is being neither accelerated nor braked, is determined in the second part of the method (step 1.7.1.2) if the value of the difference between the two mean values $MWVA_{an}$ of the wheel speeds of the front axle and $MWHA_{an}$ of the wheel speeds of the rear axle is below a threshold $\delta MW_{threshold1an}$.

11. A method as claimed in one of claims 1 to 10, **characterised in that** the second part of the defined travel conditions (step 1.7.4), that there is no radial acceleration on the vehicle, is determined in the second part of the method (1.7.4.2) if the value of the difference between the two mean values $MWVA_{an}$ of the wheel speeds of the front axle and $MWHA_{an}$ of the wheel speeds of the rear axle is below a threshold $\delta MW_{threshold1an}$.

12. A method as claimed in one of claims 1 to 10, **characterised in that**

the second part of the defined conditions (step 1.7.4), that there is no radial acceleration on the vehicle, is determined in the second part of the method (step 1.7.4.1) if the value of the difference between the corrected speeds of wheels of an axle and different sides of the vehicle is below a threshold value $\delta\Omega_{threshold1an}$.

**13.** A method as claimed in one of claims 1 to 12, **characterised in that**
the first part of the defined conditions (steps 1.3.1, 1.7.1), that the vehicle is being neither accelerated nor braked, is determined from the steering signals of an anti-locking system (ABS) and/or a drive anti-slip control (ASR).

## Revendications

**1.** Procédé de correction des vitesses de rotation de roues de véhicule fournies par des capteurs sur roues,
- où une mesure des vitesses de rotation de roues $\Omega_{vl}$, $\Omega_{vr}$, $\Omega_{hl}$, $\Omega_{hr}$ des roues d'un véhicule est effectuée,
- où, dans des conditions de marche définies, des facteurs d'équilibrage des différentes roues sont déterminés,
- où les conditions de marche définies consistent en ce que le véhicule ne sera ni accéléré ni freiné et n'a pas d'accélération transversale,
caractérisé en ce que:
- dans une première partie du procédé, une égalisation des vitesses de rotation de roues $\Omega_{vl}$, $\Omega_{vr}$, $\Omega_{hl}$, $\Omega_{hr}$, mesurées (étape 1.2) est effectuée dans les conditions de marche définies, lorsque la condition (étape 1.3.3), est satisfaite selon laquelle la vitesse de véhicule $V_{Fzg}$ est inférieure a' une première valeur de seuil $V_{Fzg,seuil\ 1}$, la vitesse du véhicule $V_{Fzg}$ et les conditions de marche définies etant déterminées à partir des vitesses de rotation cle roues mesurées $\Omega_{vl}$, $\Omega_{vr}$, $\Omega_{hl}$, $\Omega_{hr}$,
- l'égalisation des vitesses de rotation de roues $\Omega_{vl}$, $\Omega_{vr}$, $\Omega_{hl}$, $\Omega_{hr}$ mesurées (étape 1.2) étant effectuée de telle sorte (étape 1.4), que pour chacun cles deux côtés du véhicule respectivement un facteur d'égalisation soit déterminé d'une manière telle que, à partir des vitesses de rotation de roues mesurées $\Omega_{vl}$, $\Omega_{vr}$, $\Omega_{hl}$, $\Omega_{hr}$ on obtienne des vitesses de rotation de roues égalisées $\Omega_{vlan}$, $\Omega_{vran}$, $\Omega_{hlan}$, $\Omega_{hran}$,
   . une des vitesses de rotation de roues égalisées $\Omega_{vlan}$, $\Omega_{hlan}$, correspondant au côté gauche du véhicule est égale à la vitesse de rotation de roue mesurée associée $\Omega_{vl}$, $\Omega_{hl}$, tandis que l'autre des deux vitesses de rotation de roues égalisées $\Omega_{vlan}$, $\Omega_{hlan}$, correspondant au côté gauche du véhicule est déterminée à partir de la vitesse de rotation de roue mesurée associée $\Omega_{vl}$, $\Omega_{hl}$ par multiplication par le facteur d'égalisation correspondant au côté gauche du véhicule de telle sorte que les deux vitesses de rotation de roues égalisées $\Omega_{vlan}$, $\Omega_{hlan}$, correspondant au côté gauche du véhicule prennent la même valeur et
   . une des vitesses de rotation de roues égalisées $\Omega_{vran}$, $\Omega_{hran}$ correspondant au côté droit du véhicule étant égale à la vitesse de rotation de roue mesurée associée $\Omega_{vr}$, $\Omega_{hr}$ tandis que l'autre des deux vitesses de rotation de roues égalisées $\Omega_{vran}$, $\Omega_{hran}$ correspondant au côté droit du véhicule est déterminée à partir de la vitesse de rotation de roue mesurée associée $\Omega_{vr}$, $\Omega_{hr}$ par multiplication par le facteur d'égalisation correspondant au côté droit du véhicule de telle sorte que les deux vitesses de rotation de roues égalisées $\Omega_{vran}$, $\Omega_{hran}$ correspondant au côté droit du véhicule prennent la même valeur,
- en ce que dans une seconde partie du procédé, une égalisation des vitesses de rotation de roues $\Omega_{vl}$, $\Omega_{vr}$, $\Omega_{hl}$, $\Omega_{hr}$ mesurées à nouveau (étape 1.5) est effectuée dans les conditions de marche définies, lorsque la condition (étape 1.7.3) est satisfaite, selon laquelle la vitesse de véhicule $V_{Fzg}$ est supérieure à une valeur de seuil $V_{Fzg\ seuil\ 2}$,
   . la vitesse de véhicule et les conditions de marche définies étant déterminées à partir des vitesses de rotation de roues $\Omega_{vl}$, $\Omega_{vr}$, $\Omega_{hl}$, $\Omega_{hr}$ mesurées à nouveau (étape 1.5) en tenant compte des facteurs d'égalisation (étape 1.4) et
   . l'égalisation étant effectuée de telle sorte (étape 1.8) qu'une des roues soit considérée comme une roue de référence et que, pour chaque roue, un facteur d'égalisation $f_{vl}$, $f_{vr}$, $f_{hl}$ et $f_{hr}$ (2.11, 2.12, 2.13, 2.14) soit déterminé pour cette roue de référence de telle manière que la vitesse de rotation de roue égalisée concorde avec la vitesse de rotation de la roue de référence et

- en ce que les vitesses de rotation de roues $\Omega_{vl}$, $\Omega_{vr}$, $\Omega_{hl}$, $\Omega_{hr}$ mesurées successivement sont corrigées par multiplication par les facteurs d'égalisation $f_{vl}$, $f_{vr}$, $f_{hl}$ et $f_{hr}$ (2.11, 2.12, 2.13, 2.14) déterminés dans la seconde partie du procédé.

2. Procédé selon la revendication 1, caractérisé en ce que les facteurs d'égalisation $f_{vl}$, $f_{vr}$, $f_{hl}$ et $f_{hr}$ (2.11, 2.12, 2.13, 2.14) sont actualisés à des intervalles de temps déterminés.

3. Procédé selon la revendication 1, caractérisé en ce que les facteurs d'égalisation $f_{vl}$, $f_{vr}$, $f_{hl}$, et $f_{hr}$ (2.1], 2.12, 2.13, 2.14) sont actualisés au bout d'une distance de déplacement déterminée parcourue par le véhicule.

4. Procédé selon les revendications 2 et 3, caractérisé en ce qu'un critère d'actualisation des facteurs d'égalisation $f_{vl}$, $f_{vr}$, $f_{hl}$ et $f_{hr}$ (2.11, 2.12, 2.13, 2.14) est déterminé en effectuant une estimation pondérée de l'intervalle de temps correspondant à la dernière actualisation des facteurs d'égalisation $f_{vl}$, $f_{vr}$, $f_{hl}$ et $f_{hr}$ (2.11, 2.12, 2.13, 2.14) et de la distance de déplacement parcourue par le véhicule après cette dernière actualisation.

5. Procédé selon une des revendications 1 à 4, caractérisé en ce que la première partie des conditions de marche définies (étape 1.3.1) , selon laquelle le véhicule n'est ni accéléré ni freiné, est déterminée dans la première partie du procédé (étape 1.3.1.1) lorsque la ou les accélérations de roues $d\Omega_{vl}/dt$, $d\Omega_{vr}/dt$, $d\Omega_{hl}/dt$ et $d\Omega_{hr}/dt$, établies à partir de la ou des vitesses de rotation de roues mesurées $\Omega_{vl}$, $\Omega_{vr}$, $\Omega_{hl}$, $\Omega_{hr}$ sont inférieures à une valeur de seuil $d\Omega/dt_{seuil}$.

6. Procédé selon une des revendications 1 à 4, caractérisé en ce que la première partie des conditions de marche définies (étape 1.3.1), selon laquelle le véhicule n'est ni accéléré ni freiné, est déterminée dans la première partie du procédé (étape 1.3.1.2) lorsque la grandeur de la différence entre les deux valeurs moyennes MWVA des vitesses de rotation de roues de l'essieu avant et MWHA des vitesses de rotation de roue; de l'essieu arrière est inférieure à une valeur de seuil $\delta MW_{seuil\ 1}$.

7. Procédé selon une des revendications 1 à 6. caractérisé en ce que la seconde partie des conditions de marche définies (étape 1.3.4) selon laquelle le véhicule n'a aucune accélération transversale, est déterminée dans la première partie du procédé (étape 1.3.4.2) quand la grandeur de la différence entre les deux valeurs moyennes MWVA des vitesses de rotation de roues de l'essieu avant et MWHA des vitesses de rotation de roues de l'essieu arrière est inférieure à une valeur de seuil $\delta MW_{seuil\ 2}$.

8. Procédé selon une des revendications 1 à 6, caractérisé en ce que la seconde partie des conditions de marche définies (étape 1.3.4), selon laquelle le véhicule n'a aucune accélération transversale, est déterminée dans la première partie du procédé (étape 1.3.4.1) lorsque la grandeur de la différence entre les vitesses de rotation des roues d'un essieu et de différents côtés du véhicule est inférieure à une valeur de seuil $\delta\Omega_{seuil\ 1}$.

9. Procédé selon une des revendications 1 à 8, caractérisé en ce que la première partie des conditions de marche définies (étape 1.7.1) , selon laquelle le véhicule n'est ni accéléré ni freiné, est déterminée dans une seconde partie du procédé (étape 1.7.1.1) lorsque les accélérations de roues $d\Omega_{vlan}/dt$, $d\Omega_{vran}/dt$, $d\Omega_{hlan}/dt$ et $d\Omega_{hran}/dt$, établies à partir de la ou des vitesses de rotation de roues égalisées $\Omega_{vlan}$, $\Omega_{vran}$, $\Omega_{hlan}$, $\Omega_{hran}$ sont inférieures à une valeur de seuil $d\Omega/dt_{seuil\ 1an}$.

10. Procédé selon une des revendications 1 à 8, caractérisé en ce que la première partie des conditions de marche définies (étape 1.7.1) selon laquelle le véhicule n'est ni accéléré ni freiné, est déterminée dans une seconde partie du procédé (étape 1.7.1.2) lorsque la grandeur de la différence entre les deux valeurs moyennes $MWVA_{an}$ des vitesses de rotation de roues de l'essieu avant et $MWHA_{an}$ des vitesses de rotation de roues de l'essieu arrière est inférieure à une valeur de seuil $\delta MW_{seuil\ 1an}$.

11. Procédé selon une des revendications 1 à 10, caractérisé en ce que la seconde partie des conditions de marche définies (étape 1.7.4) selon laquelle le véhicule n'a aucune accélération transversale, est déterminée dans une seconde partie du procédé (étape 1.7.4.2) lorsque la grandeur de la différence entre les deux valeurs moyennes $MWVA_{an}$ des vitesses de rotation de roues, de l'essieu avant et $MWHA_{an}$ des vitesses de rotation de roues de l'essieu arrière est inférieure à une valeur de seuil $\delta MW_{seuil\ 2an}$.

12. Procédé selon une des revendications 1 à 10, caractérisé en ce que la seconde partie des conditions de marche définies (étape 1.7.4), selon laquelle le véhicule n'a aucune accélération transversale, est déterminée dans une seconde partie du procédé (étape 1.7.4.1) lorsque la grandeur de la différence entre les vitesses de rotation de roues égalisées pour les roues d'un essieu et pour différents côtés du véhicule est inférieure à une valeur de seuil $\delta\Omega_{seuil\ 1an}$.

13. Procédé selon une des revendications 1 à 12, caractérisé en ce que la première partie des conditions de marche définies (étapes 1.3.1, 1.7.1), selon laquelle le véhicule n'est ni accéléré ni freiné, est déterminée à partir des signaux d'activation d'un système anti-blocage (ABS) et/ou d'un système de régulation de patinage à l'entraînement (ASR).

# Fig.1

1.1 ⟶

1.2 $\left(\Omega_{vl}, \Omega_{vr}, \Omega_{hl}, \Omega_{hr},\right)$

1.3.1

1.3.1.1

$\left\{\left|\dfrac{d\Omega_{vl}}{dt}\right|, \left|\dfrac{d\Omega_{vr}}{dt}\right| \right.$
$\left|\dfrac{d\Omega_{hl}}{dt}\right|, \left|\dfrac{d\Omega_{hr}}{dt}\right|\left.\right\}$
$< \dfrac{d\Omega}{dt}_{Schwelle}$

nein

ja

1.3.1.2
$$MWVA = \frac{\Omega_{vl} + \Omega_{vr}}{2}$$
$$MWHA = \frac{\Omega_{hl} + \Omega_{hr}}{2}$$

1.3.1.2

$|MWVA - MWHA|$
$< \delta MW_{Schwelle\,1}$

nein

ja

1.3.2 $V_{Fzg} = f(\Omega_{vl}, \Omega_{vr}, \Omega_{hl}, \Omega_{hr},)$

1.3

1.3.3 $v_{Fzg} \leqslant v_{Fzg,Schwelle\,1}$

nein

ja

1.3.4

1.3.4.1

$|\{\Omega_{vl}, \Omega_{hl}\} -$
$\{\Omega_{vr}, \Omega_{hr}\}|$
$< \delta\Omega_{Schwelle\,1}$

nein

ja

1.3.4.2

$|MWVA - MWHA|$
$< \delta MW_{Schwelle\,2}$

nein

ja

1.4
$\Omega_{vl} \leftrightarrow \Omega_{hl}; \ \Omega_{vr} \leftrightarrow \Omega_{hr}$
$\Omega_{vlan} \ \Omega_{hlan} \Omega_{vran} \ \Omega_{hran}$

$\underline{I}$

$I$

1.5 $\quad \Omega_{vl}, \Omega_{vr}, \Omega_{hl}, \Omega_{hr},$

1.6 $\quad \Omega_{vl\,an}, \Omega_{vr\,an}, \Omega_{hl\,an}, \Omega_{hr\,an},$

1.7.1

1.7.1.2
$$MWVA_{an}=\frac{\Omega_{vl\,an}+\Omega_{vr\,an}}{2}$$
$$MWHA_{an}=\frac{\Omega_{hl\,an}+\Omega_{hr\,an}}{2}$$

1.7.1.1
$$\left|\frac{d\Omega_{vl}^{an}}{dt}\right|, \left|\frac{d\Omega_{vr}^{an}}{dt}\right|$$
$$\left|\frac{d\Omega_{hl}^{an}}{dt}\right|, \left|\frac{d\Omega_{hr}^{an}}{dt}\right|$$
$$<\frac{d\Omega}{dt}_{Schwelle}^{an}$$

nein

ja

1.7.1.2
$$|MWVA_{an}-MWHA_{an}|$$
$$<\delta MW_{Schwelle\,1}^{an}$$
nein

ja

1.7.2 $\quad V_{Fzg}=f(\Omega_{vl\,an},\Omega_{vr\,an},\Omega_{hl\,an},\Omega_{hr\,an})$

1.7

1.7.3 $\quad v_{Fzg} > v_{Fzg,Schwelle\,2}$     nein

ja

1.7.4

1.7.4.1
$$\left|\{\Omega_{vl\,an},\Omega_{hl\,an}\}\right.$$
$$\left.\{\Omega_{vr\,an},\Omega_{hr\,an}\}\right|$$
$$<\delta\Omega_{Schwelle\,1}^{an}$$
nein

ja

1.7.4.2
$$|MWVA_{an}-MWHA_{an}|$$
$$<\delta MW_{Schwelle\,2}^{an}$$
nein

ja

1.8
$$\Omega_{vl} \leftarrow \Omega_{hl}; \Omega_{vr}; \Omega_{hr}$$
$$f_{vl}, f_{vr}, f_{hl}, f_{hr},$$
$$\Omega_{vl\,ab}, \Omega_{vr\,ab}, \Omega_{hl\,ab}, \Omega_{hr\,ab},$$

# Fig. 2